# EUROPEAN PATENT SPECIFICATION

(11) **EP 1 168 718 B1**
(45) Date of publication and mention of the grant of the patent: **23.03.2005**
(21) Application number: 00440195.6
(22) Date of filing: 30.06.2000
(51) Int. Cl.: H04L 12/46

(54) **Method and device to communicate with a device not belonging to the same virtual private network**
Verfahren und Apparat um mit Apparate zu kommunizieren die nicht zum selben virtuellen privaten Netzwerk (VPN) gehören
Procédé et appareil pour communiquer avec un appareil n'appartenant pas au même réseau virtuelle privé (VPN)

(43) Date of publication of application: 02.01.2002
(73) Proprietor: ALCATEL, 75008 Paris (FR)
(72) Inventor: Chantrain, Dominique, 2650 Edegem (BE); Hublet, Christian, 9080 Lochristi (BE); T'Joens, Yves, 8200 Sint Michiels-Brugge (BE); Focant, Stéphane, 1050 Elsene (BE); Sierens, Christiaan, 2640 Mortsel (BE)
(74) Representative: Urlichs, Stefan, Dipl.-Phys.

(56) References cited:
- WO-A-98/57465
- GIACOMETTI S ET AL: "TUNNELLING EFFECTIVENESS IN THE ACCESS ENVIRONMENT" GB,LONDON: IBTE, 24 August 1999 (1999-08-24), pages 101-105, XP000847178
- Gleeson et al: *dRFC 2764: A Framework for IP Based Virtual Private Networks*d; February 2000; retrieved from the Internet on 9.3.04, ftp://ftp.isi.edu/in-notes/rfc2764.txt; pg. 1-62; XP864260

## Description

The present invention relates to data communication systems and more particularly to an access method implemented in a network access server for enabling end-users to access the core network.

The framework of this invention concerns the way individuals and companies are given access to interconnected data communication networks. Interconnected data communication networks consist for example of the public Internet and of a plurality of virtual private networks (VPN) operated by third parties. These third party VPNs may be corporate intranets to which external access is severely controlled, for example, by firewalls. External access to a third party VPN has however to be permitted for example for employees on travel to be able to access the corporate intranet by means of lap tops wherever they are located or for home-working. This kind of external accesses to third party VPNs are usually provided by an access service provider owning a Network Access Server (NAS

Such VPNs and their realization are described in Gleeson et al., "RFC 2764: A framework for IP based virtual private networks", 2.2000, IETF, retrieved from the Internet on 9.3.04, ftp://ftp.isi.edu/in-notes/rfc2764.txt: XP864260.

Several value-added services, proposed by access service providers, require that an end-user, while being connected to one third party VPN over a NAS, can simultaneously access to a local service network, called local VPN, associated to the NAS and usually operated by the access service provider, without disconnecting from the third party VPN.

An issue related to this kind of simultaneous access is due to addressing schemes. Heterogeneous interconnected networks are harmonized by all supporting the internet protocol IP or any of its variations. Usually and because of the restricted number of IP addresses available for an access service provider, the NAS uses overlapping address pools for different VPNs. As a consequence, two users connected to two different third party VPNs over the same NAS may have been attributed the same IP address. Thanks to the IP address and the identity of the VPN from which a message has been sent, the NAS can univocally distinguish the two users having the same IP address.

This becomes a problem if one of these users wants to be simultaneously connected to one identical further communication device without releasing the connection to its corresponding third party VPN. Such a communication device may be a server belonging to a VPN, called local VPN, associated to the NAS and owned by the access service provider. In that case, the NAS is no more able to distinguish them since both have the same IP address and get messages from the same local VPN.

A common method for solving this problem consists in introducing a network address translation (NAT) in the NAS. In this approach, the IP address of the user is translated in the NAS itself, such that for communication towards servers of the local VPN, each user appears to have a unique IP address. This approach has a number of important drawbacks: first of all it puts a heavy load on the NAS, since each IP packet flowing between the user and the local VPN has to be translated and as a consequence to be modified. Recent variations of the IP protocol, such as IPsec, rely on the fact that packets should not be altered between the endpoints, while NAT does alter them. As a consequence, this solution imposes some restrictions on the protocols that can be used, and hence on the services that can be offered.

A another method of solving this problem consists in allocating multiple IP addresses to the user. Depending on whether an given application is associated with a third party VPN or with the services in the local VPN, the application will use a different IP address to send its packets. This solution assumes that there is a well-controlled mechanism to specify for each application which IP address it has to use at a given point in time. This is extremely difficult to guarantee in case the same application is used to access subsequently services in different VPNs, e.g. if the user is browsing from a URL in VPN 1 to a URL in VPN 2. In other words, the solution is extremely complex to realize, since typically the access service provider has no control over the applications and protocol stacks running on the user terminal.

A particular object of the present invention is to provide a method that remains transparent for the end-user since none of them need to care about mechanism for distinguishing between several IP addresses.

Another object of the invention is to provide a method that does not too much overload the NAS.

These objects, and others that appear below, are achieved by a method for enabling a user registered in a NAS as already connected to a VPN, called host VPN, to communicate with at least a communication device not belonging to the host VPN, the NAS having access over a data communication network to the communication device and to a plurality of VPNs. The method comprises a step of sending messages belonging to a communication between the user and the communication device over a logical channel between the NAS and the communication device, the logical channel referring to an identifier of the host VPN.

This method has the advantage that it does not require IP packet alteration.

The present invention also concerns a Network Access Server according to claim 8.

Other characteristics and advantages of the invention will appear on reading the following description of a preferred implementation given by way of non-limiting illustrations, and from the accompanying drawings, in which:
- Figure 1 shows a physical architecture of interconnected data communication networks where the present invention can be applied;
- Figure 2 shows an embodiment of a NAS according to the present invention.

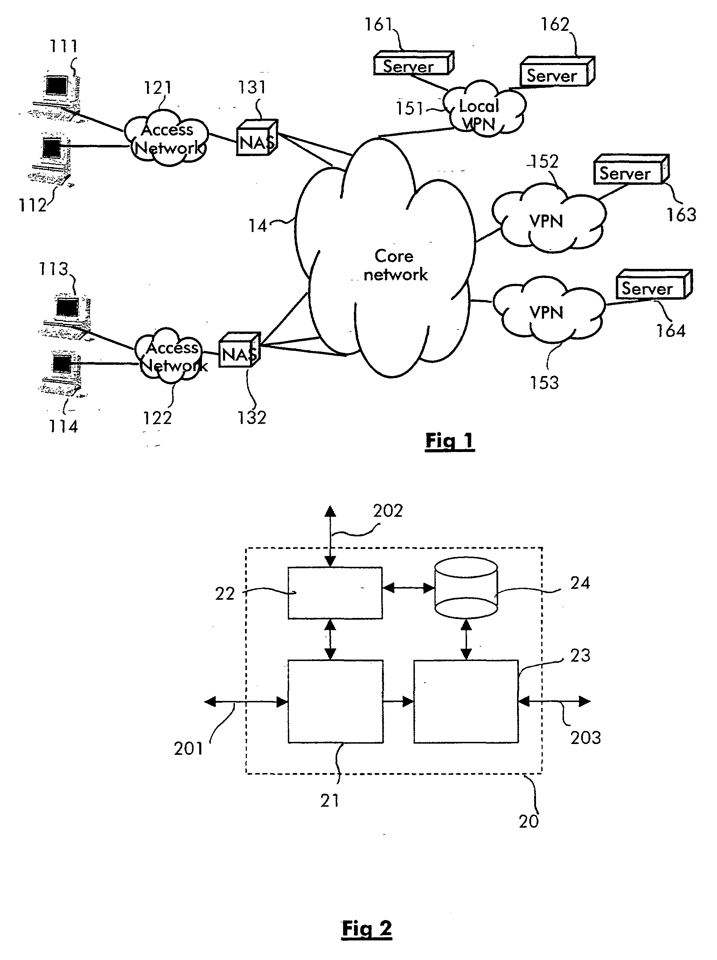

Figure 1 shows a physical architecture of interconnected data communication networks comprising several VPNs 151, 152, 153 and access networks 121, 122 interconnected though a core network 14, for example the public Internet or leased lines.

End-users 111, ..., 114 are connected over access networks 121, 122 to NASs 131, 132. NASs 131, 132 enable the access of end-users 111, ..., 114 to the core network 14 and to the interconnected data communication networks 151, ..., 153. Some servers 161, ..., 164 belonging to the different VPN 151, ..., 153 are represented on the figure by way of example. Servers 161 and 162 belongs to VPN 151, server 163 to VPN 152 and server 164 to VPN 153. These servers contain VPN specific information and preferably support features like authentication or authorization.

VPN 151 plays a privileged role in that it is preferably associated to NAS 131 and called local VPN in the following. For example, the NAS as well as the local VPN are owned by a single access service provider. This is however not a requirement of the invention. VPN 152 and 153 are preferably third party VPN for example corporate intranets.

Local VPN 151 may be interconnected to core network 14 as represented on the figure. Alternatively, local VPN 151 can also be directly connected to NAS 131. Several different NAS 131, 132 can be associated to the same local VPN 151.

Access networks 121 and 122 may be usual telephone networks like PSTN or ISDN or cable networks as well as radio networks.

If access networks 131, 132 are usual telephone networks, NASs 131, 132 comprise analog modems to terminate PSTN analog connections. In case of an ISDN digital connection, the signal need not to be demodulated. NASs 131, 132 also comprise a router function and a gateway to the core network.

In the description below, an example will be used to illustrate the invention. In this example, it is assumed that user 111 communicates with server 163 belonging to VPN 152. This communication takes place over NAS 131. It is also assumed that user 112 communicates with server 164 belonging to VPN 153. This communication also takes place over NAS 131. Preferably, we consider a situation where a connection is currently established between user 111 and VPN 152 as well as between user 112 and VPN 153. These connections are preferably realized as PPP (Point to Point Protocol) connections between users 111, respectively 112, and NAS 131, respectively 131, in combination with appropriate routing table settings in NAS 131, respectively 131. Any other type of connections usually used in an access network may also be considered.

During connection set up, an IP address is allocated to the user requiring the connection and for the connection duration. During the connection set up, each user 111, 112 also indicates to the NAS 131 to which VPN it wants to connect.

As NAS 131 usually has a limited pool of IP addresses at its disposal, a single IP may be allocated to different users connected at the same time to NAS 131 on the condition that the users want to be connected to different VPN. To this extend, the IP address alone does not univocally identifies the user. As a consequence, only the association of the VPN to which a user is connected and its IP address univocally identify the user at the NAS. In this example, it is assumed that user 111 and user 112 are allocated the same IP address by the NAS 131 during the connection setup. This complies with the above remark since both want to connect to different VPNs.

During connection setup, NAS 131 fills in a table comprising information related to connections to be established between users 111, 112 attached to NAS 131 and VPNs 152, 153. This information is held in the table for the whole duration of a connection. An entry of this table comprises preferrably a user identification specific to access network 121 (e.g. a calling number), the IP address allocated to that user and a VPN identifier indicating to which VPN that user is currently connected.

Assumed that in parallel to the already established connections, user 111 want to communicate simultaneously with server 161 located in local VPN 151 without releasing its connection to VPN 152. A message destined to server 161 comprising the source address of user 111 as well as the destination IP address of server 161 is sent to NAS 131. NAS 131 detects that, although user 111 is already connected to VPN 152, the message containing the destination IP address of server 161 should be directed toward VPN 151.

Assumed that server 161 were to answer to this message with an answer message directed to user 111, it would build an IP message containing as destination address the IP address of user 111 found in the received message. Upon reception of this answer message the NAS 131 will not be able to identify univocally that this answer message is destined to user 111 since user 112 also has the same IP address.

According to the invention, as soon as NAS 131 detects that a message is destined to a server 161 not belonging to the VPN 152 to which user 111 is registered as already connected, the message is directed on a logical channel having, as logical channel identifier, the identifier of VPN 152 to which user 111 is registered as already connected.

The principle of logical channels as such are generally known by those skilled in the art and are realized by means of several techniques.

The realization of logical channel between the NAS 131 and VPN 151 may be, for example, done by means of encapsulation. The NAS 131 should encapsulate each message destined to server 161 in a packet the header part of which containing an identifier of the VPN to which the user 111 is registered as already connected. A particular form of encapsulation, called tunneling, may also be used. One principle of tunneling is to encapsulate a protocol data corresponding to a certain layer in the OSI communication model in another protocol data corresponding to the same layer in the OSI communication model. This is advantageous in heterogeneous networks for privacy and security matters.

In case server 161 has to answer to a message sent by user 111 and received over a logical channel having an identifier of VPN 152 as logical channel identifier, server 161 sends back the answer message over the same logical channel. Upon reception of the answer message at the NAS 131, the latter identifies the logical channel identifier of the logical channel on which the message has been received and extracts the message from the logical channel. NAS 131 can univocally identify to which user the answer message is destined since it has access to the IP address contained in the answer message as well as to the identifier of the VPN to which the user is already connected. With this couple of information the NAS is able to identify univocally user 111.

An advantage of this method is that it is transparent for the end-users.

Figure 2 shows an embodiment of a NAS according to the present invention. The NAS 20 comprises a forwarding engine 21, a logical channel controller 22, a routing part 23 and a table 24. NAS 20 comprises also three interfaces. A first interface 201 to access network and users, a second interface 202 to a local VPN (local VPN 151 shown on figure 1) and a third interface 203 to third party VPNs (VPN 152 and 153 shown on figure 1).

First interface 201 is connected to forwarding engine 21 which is in turn connected to logical channel controller 22 as well as to routing part 23. Logical channel controller 22 is connected to second interface 202 and routing part is connected to third interface 203. Logical channel controller 22 as well as routing part 23 can access to table 24. Table 24 is a database comprising entries registering the already established connections between a user, and an third party VPN. Each entry comprises an identification of the user specific to the access network to which this user is connected, the IP address of this user and an identifier of the third party VPN to which the user is connected. Other information may also be available in each entry.

Upon reception of a message on the first interface 201, forwarding engine 21 checks if this message is destined to the local VPN or to a third party VPN to which the user is already connected. This check is done by analyzing the destination IP address contained in the message.

If the message is destined to a third Party VPN. The message is transparently conveyed to routing part 23 and sent over third interface 203.

If the message is destined to the local VPN, the message is transmitted to logical channel controller 22. Logical channel controller 22 checks the source IP address contained in the message and searches in table 24 if this user is already connected to a third party VPN. If this is the case, it extracts the third party VPN identifier to which the user is already connected. Logical channel controller 22 then directs the message on a logical channel having as logical channel identifier the third party VPN identifier or any identifier univocally derived thereof. If the user is not connected to any VPN, a default reserved logical channel identifier is used to send the message to the local VPN.

Upon reception of a message on the second interface 202, logical channel controller 22 is responsible of finding to which VPN, if any, the user to which this message is destined is already connected to. For this purpose, logical channel controller 22 extracts the logical channel identifier of the channel on which the message has been received over interface 202. The VPN identifier may be identical to the logical channel identifier or univocally deduced thereof by means of an association table not represented on figure 2.

Logical channel controller 22 also extracts the destination IP address contained in the message. Then, logical channel controller 22 searches in table 24 the user corresponding to the IP address and the VPN identifier. This identifies univocally the user to which the message has to be transmitted. The message is then transmitted to forwarding engine 21 which sends the message on the first interface 201 to the identified user.

Alternatively to the embodiment described above, table 24 may not be contained in NAS 20. Table 24 may be stand alone and accessible by NAS 20 but also by other modules located out of the NAS, in particular modules residing on a server in the local VPN. Table 24 may also be shared by different NASes.

In another embodiment of the invention, it can be envisaged that two separate NASes treat separately the reception of a message on the first interface 201 and the reception of a message on the second interface 202.

## Claims

1. Method for enabling a user (111) registered in a Network Access Server (131) as already connected to a Virtual Private Network (152), called host Virtual Private Network, to communicate with at least one communication device (161) outside of said host Virtual Private Network (152), said Network Access Server (131) having access over a data communication network (14, 151) to said communication device (161) and to a plurality of Virtual Private Networks (151, 152, 153) comprising said host Virtual Private Network, said method comprises a step of sending messages belonging to a communication between said user (111) and said communication device (161) over a logical channel between said Network Access Server (131) and said communication device (161), said method being **characterized in that** said logical channel is referring to an identifier of said host Virtual Private Network (152).

2. Method according to claim 1, **characterized in that** it further comprises the steps of:
- detecting at said Network Access Server (131) a message from said user (111) destined to said communication device (161); and
- forwarding said message from said Network Access Server (131) to said communication device (161) over the logical channel referring to the identifier of said Virtual Private Network (152).

3. Method according to claim 1, **characterized in that** it further comprises the steps of:
- detecting a message from said communication device (161) being received at said Network Access Server (131) on the logical channel referring to the identifier of a Virtual Private Network (152), said message containing a user destination address;
- determining a user (111) registered in said Network Access Server (131) as already connected to said Virtual Private Network (152) and corresponding to said destination address; and
- forwarding said message from said Network Access Server (131) to said user (111).

4. Method according to any of claims 1 to 3, **characterized in that** said messages belonging to the communication between said user (111) and said communication device (161) are encapsulated in data packets, said data packets comprising a field containing said identifier of said host Virtual Private Network (152) or an indication derived of said identifier.

5. Method according to claim 4, **characterized in that** said messages belonging to the communication between said user (111) and said communication device (161) are sent over a tunnel having said identifier of said host Virtual Private Network (152) as tunnel identifier.

6. Method according to any of claims 1 to 5, **characterized in that** said messages are consisting of IP packets comprising an IP address of said user (111).

7. Method according to claim 1, **characterized in that** said communication device (161) is a server belonging to a Virtual Private Network (151), called local Virtual Private Network, associated to said Network Access Server (131) and different from said host Virtual Private Network.

8. Network Access Server (20) adapted to enabling a communication between a user and a communication device, said user being registered in said Network Access Server as already connected to a Virtual Private Network, called host Virtual Private Network, said communication device being outside of said host Virtual Private Network, said Network Access Server being able to access to a database associating an identifier of said user to an identifier of said host Virtual Private Network, said Network Access Server further comprises means for sending messages originating from said user and destined to said communication device on a logical channel between said Network Access Server and said communication device, **characterized in that** said logical channel is referring to said identifier of said host Virtual Private Network.

## Patentansprüche

1. Verfahren, um es einem Benutzer (111), der in einem Netzwerkzugriffsserver (131) als bereits mit einem als Host Virtual Private Network bezeichneten virtuellen privaten Netz (152) verbunden registriert ist, zu ermöglichen, mit mindestens einer Kommunikationseinrichtung (161) außerhalb des Host Virtual Private Network (152) zu kommunizieren, wobei der Netzwerkzugriffsserver (131) über ein Datenkommunikationsnetz (14, 151) auf die Kommunikationseinrichtung (161) und eine das Host Virtual Private Network umfassende Vielzahl von virtuellen privaten Netzen (151, 152, 153) zugreifen kann, welches Verfahren einen Schritt umfasst, in dem Nachrichten, die zu einer Kommunikation zwischen dem Benutzer (111) und der Kommunikationseinrichtung (161) gehören, über einen logischen Kanal zwischen dem Netzwerkzugriffsserver (131) und der Kommunikationseinrichtung (111) gesendet werden, **dadurch gekennzeichnet, dass** der logische Kanal durch eine Kennung des Host Virtual Private Network (152) bezeichnet wird.

2. Verfahren nach Anspruch 1, **dadurch gekennzeichnet, dass** es ferner folgende Schritte umfasst:
- Erkennen einer von dem Benutzer (111) kommenden und für die Kommunikationseinrichtung (161) bestimmten Nachricht in dem Netzwerkzugriffsserver (131); und
- Weiterleiten der Nachricht von dem Netzwerkzugriffsserver (131) an die Kommunikationseinrichtung (161) über den durch die Kennung des virtuellen privaten Netzes (152) bezeichneten logischen Kanal.

3. Verfahren nach Anspruch 1, **dadurch gekennzeichnet, dass** es ferner folgende Schritte umfasst:
- Erkennen einer von der Kommunikationseinrichtung (161) kommenden Nachricht, die im Netzwerkzugriffsserver (131) auf dem durch die Kennung eines virtuellen privaten Netzes (152) bezeichneten logischen Kanal empfangen wird, wobei die Nachricht eine Benutzer-Zieladresse enthält;
- Ermitteln eines Benutzers (111), der im Netzwerkzugriffsserver (131) als bereits mit dem virtuellen privaten Netz (152) verbunden registriert ist und der Zieladresse entspricht; und
- Weiterleiten der Nachricht vom Netzwerkzugriffsserver (131) an den Benutzer (111).

4. Verfahren nach einem der Ansprüche 1 bis 3, **dadurch gekennzeichnet, dass** die zu der Kommunikation zwischen dem Benutzer (111) und der Kommunikationseinrichtung (161) gehörenden Nachrichten in Datenpaketen eingekapselt werden, wobei die Datenpakete ein Feld umfassen, das die Kennung des Host Virtual Private Network (152) oder einen von dieser Kennung abgeleiteten Indikator enthält.

5. Verfahren nach Anspruch 4, **dadurch gekennzeichnet, dass** die zu der Kommunikation zwischen dem Benutzer (111) und der Kommunikationseinrichtung (161) gehörenden Nachrichten über einen Tunnel gesendet werden, der als Kennung die Kennung des Host Virtual Private Network (152) aufweist.

6. Verfahren nach einem der Ansprüche 1 bis 5, **dadurch gekennzeichnet, dass** die Nachrichten aus IP-Paketen bestehen, die eine IP-Adresse des Benutzers (111) umfassen.

7. Verfahren nach Anspruch 1, **dadurch gekennzeichnet, dass** die Kommunikationseinrichtung (161) ein Server ist, der zu einem virtuellen privaten Netz (151) gehört, das als lokales virtuelles privates Netz bezeichnet wird und dem Netzwerkzugriffsserver (131) zugeordnet ist sowie von dem Host Virtual Private Network verschieden ist.

8. Netzwerkzugriffsserver (20), der zum Ermöglichen einer Kommunikation zwischen einem Benutzer und einer Kommunikationseinrichtung geeignet ist, wobei der Benutzer in dem Netzwerkzugriffsserver als bereits mit einem als Host Virtual Private Network bezeichneten virtuellen privaten Netz verbunden registriert ist, die Kommunikationseinrichtung außerhalb des virtuellen privaten Netzes angeordnet ist, der Netzwerkzugriffsserver auf eine Datenbank zugreifen kann, die eine Kennung des Benutzers einer Kennung des Host Virtual Private Network zuordnet, und der Netzwerkzugriffsserver ferner Mittel umfasst zum Senden von von dem Benutzer kommenden und für die Kommunikationseinrichtung bestimmten Nachrichten auf einem logischen Kanal zwischen dem Netzwerkzugriffsserver und der Kommunikationseinrichtung, **dadurch gekennzeichnet, dass** der logische Kanal durch die Kennung des Host Virtual Private Network bezeichnet wird.

## Revendications

1. Procédé pour permettre à un utilisateur (111) enregistré dans un serveur d'accès à distance (131) comme étant déjà connecté à un réseau privé virtuel (152), appelé réseau privé virtuel hôte, de communiquer avec au moins un dispositif de communication (161) à l'extérieur dudit réseau privé virtuel hôte (152), ledit serveur d'accès à distance (131) ayant accès par le biais d'un réseau de communication de données (14, 151) audit dispositif de communication (161) et à une pluralité de réseaux privés virtuels (151, 152, 153) comprenant ledit réseau privé virtuel hôte, où ledit procédé comprend une étape consistant à envoyer des messages appartenant à une communication entre ledit utilisateur (111) et ledit dispositif de communication (161) par le biais d'un canal logique entre ledit serveur d'accès à distance (131) et ledit dispositif de communication (161), ledit procédé étant **caractérisé en ce que** ledit canal logique fait référence à un identifiant dudit réseau privé virtuel hôte (152).

2. Procédé selon la revendication 1, **caractérisé en ce qu'**il comprend en outre les étapes consistant à :
- détecter sur ledit serveur d'accès à distance (131) un message à partir dudit utilisateur (111) destiné audit dispositif de communication (161) ; et
- réacheminer ledit message depuis ledit serveur d'accès à distance (131) vers ledit dispositif de communication (161) par le biais du canal logique faisant référence à l'identifiant dudit réseau privé virtuel (152).

3. Procédé selon la revendication 1, **caractérisé en ce qu'**il comprend en outre les étapes consistant à :
- détecter un message à partir dudit dispositif de communication (161) étant reçu dans ledit serveur d'accès à distance (131) sur le canal logique faisant référence à l'identifiant d'un réseau privé virtuel (152), ledit message contenant une adresse de destination d'utilisateur ;
- déterminer si un utilisateur (111) enregistré dans ledit serveur d'accès à distance (131) est déjà connecté audit réseau privé virtuel (152) et correspond à ladite adresse de destination ; et
- réacheminer ledit message depuis ledit serveur d'accès à distance (131) vers ledit utilisateur (111).

4. Procédé selon l'une quelconque des revendications 1 à 3, **caractérisé en ce que** lesdits messages appartenant à la communication entre ledit utilisateur (111) et ledit dispositif de communication (161) sont encapsulés dans des paquets de données, lesdits paquets de données comprenant un champ contenant ledit identifiant dudit réseau privé virtuel hôte (152) ou une indication dérivée dudit identifiant.

5. Procédé selon la revendication 4, **caractérisé en ce que** lesdits messages appartenant à la communication entre ledit utilisateur (111) et ledit dispositif de communication (161) sont envoyés par le biais d'un tunnel ayant ledit identifiant dudit réseau privé virtuel hôte (152) en tant qu'identifiant de tunnel.

6. Procédé selon l'une quelconque des revendications 1 à 5, **caractérisé en ce que** lesdits messages sont constitués de paquets de données IP comprenant une adresse IP dudit utilisateur (111).

7. Procédé selon la revendication 1, **caractérisé en ce que** ledit dispositif de communication (161) est un serveur appartenant à un réseau privé virtuel (151), appelé réseau privé virtuel local, associé audit serveur d'accès à distance (131) et différent dudit réseau privé virtuel hôte.

8. Serveur d'accès à distance (20) fonctionnant pour permettre une communication entre un utilisateur et un dispositif de communication, ledit utilisateur étant enregistré dans ledit serveur d'accès à distance comme étant déjà connecté à un réseau privé virtuel, appelé réseau privé virtuel hôte, ledit dispositif de communication étant situé à l'extérieur dudit réseau privé virtuel hôte, ledit serveur d'accès à distance étant en mesure d'accéder à une base de données associant un identifiant dudit utilisateur à un identifiant dudit réseau privé virtuel hôte, où ledit serveur d'accès à distance comprend en outre des moyens pour envoyer des messages provenant dudit utilisateur et destinés audit dispositif de communication sur un canal logique entre ledit serveur d'accès à distance et ledit dispositif de communication, **caractérisé en ce que** le canal logique fait référence audit identifiant dudit réseau privé virtuel hôte.
